# EUROPEAN PATENT SPECIFICATION

(11) **EP 1 987 907 B1**
(45) Date of publication and mention of the grant of the patent: **09.03.2011**
(21) Application number: 08009241.4
(22) Date of filing: 09.08.2000
(51) Int. Cl.: B23K 20/12

(54) **Friction stir joining method**
Reibrührschweißverfahren
Procédé de jonction par friction malaxage

(30) Priority: 24.11.1999 JP 33285599
(43) Date of publication of application: 05.11.2008
(62) Divisional of application: 00306790.7
(73) Proprietor: Hitachi, Ltd., Chiyoda-ku Tokyo 100-8280 (JP)
(72) Inventor: Ezumi, Masakuni, Chiyoda-ku Tokyo 100-8220 (JP); Fukuyori, Kazusige, Chiyoda-ku Tokyo 100-8220 (JP); Ina, Yoshihiko, Chiyoda-ku Tokyo 100-8220 (JP); Matsunaga, Tetsuya, Chiyoda-ku Tokyo 100-8220 (JP)
(74) Representative: Paget, Hugh Charles Edward

(56) References cited:
- EP-A- 0 797 043
- EP-A- 0 867 254

## Description

The present invention relates to a method of joining by friction stir welding. For example, the present invention is suitable for friction stir welding of an aluminum alloy extruded frame member which is used in a railway vehicle or a building structure etc.

The friction stir welding or joining method is a method in which by rotating a round rod called as "a rotary tool") which is inserted into a joining portion and moving the rotary tool along to a joining line of extruded frame members, and the friction stir joining portion is heated, softened and plastically fluidized and a solid-state joined. The rotary tool is comprised of a small diameter portion which is inserted into the friction stir joining portion and a large diameter portion which is positioned at an outside of the small diameter portion of the rotary tool. The small diameter portion and the large diameter portion of the rotary tool have the same axis. A boundary between the small diameter portion and the large diameter portion of the rotary tool is inserted a little into the joining portion. The above stated technique is disclosed, for example in EP 0797043 A2.

In Fig. 9 of EP 0797043 A2 joining of two faces of hollow extruded frame members is carried out from one of the two faces of the hollow extruded frame members. Namely, plates of the two members are abutted and friction stir joining is carried out. The outer face side of said plates is joined flatly. The abutting end portion of the plates is orthogonal to the thickness direction.

Further, in Fig. 7 of EP 0797043 A2 members having raised portions are joined and as a result a good friction stir joining is obtained.

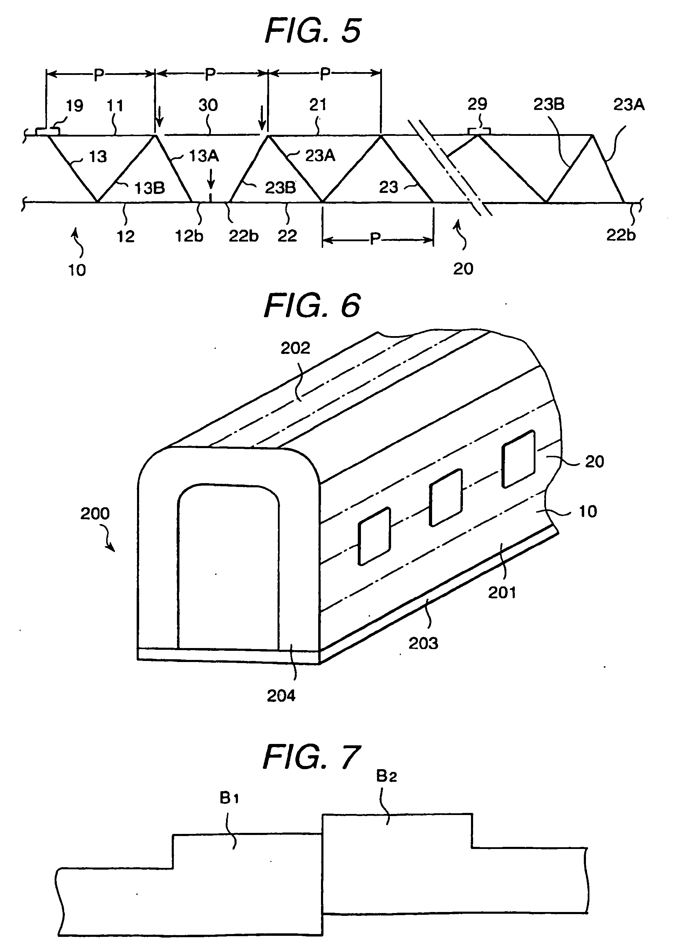

As shown in Fig. 9 of EP 0797043 A2, a case where two plates (the extruded frame members) having the long size, for example about 25 m, are abutted and are joined is taken into the consideration. During the joining the plate of the joining portion is pressed down from above. The means for pressing is a pressing metal fitting means or a roller which moves together with the rotary tool. Further, after the two plates have been welded temporarily with a predetermined pitch, by pressing under the two frame members, the friction stir joining is carried out. When the plate is the long size material, there is a case in which the end portion of the plate is deformed with a waveform shape in a longitudinal direction. In this case, as shown in Fig. 7, in the abutted portion, in the end portion of the two plates B1 and B2, there is caused a step-wise difference in an upper and lower direction. This step-wise difference can be removed by pressing down from above.

However, to remove the above stated step-wise difference, it is necessary to make small the pitch of the pressing-under metal fixing means, then the apparatus has a high cost. Further, after the temporary fixing welding, when the friction stir joining is carried out, it is necessary to remove be the step-wise difference and similarly there is a problem. EP 0797043 A2 discloses in combination the features of the preamble of claim 1.

An object of the present invention is to provide a method in which in the abut joining of the plates such a step-wise difference does not exist.

The method of the invention is set out in claim 1.

### Brief Description of Drawings:

Fig. 1 is a longitudinal cross-sectional view showing an abut joining portion of one embodiment according to the present invention;
Fig. 2 is a longitudinal cross-sectional view showing the joining portion of Fig. 1 before joining;
Fig. 3 is a longitudinal cross-sectional view showing the a joining portion in the embodiment of Fig. 1;
Fig..4 is a longitudinal cross-sectional view showing portions of hollow frame members of one embodiment according to the present invention;
Fig. 5 is a longitudinal cross-sectional view showing a pair of hollow frame members of one embodiment according to the present invention;
Fig. 6 is a perspective view showing a car body of a railway vehicle; and
Fig. 7 is a longitudinal cross-sectional view showing an abut portion according to the prior art.

### Description of the Invention:

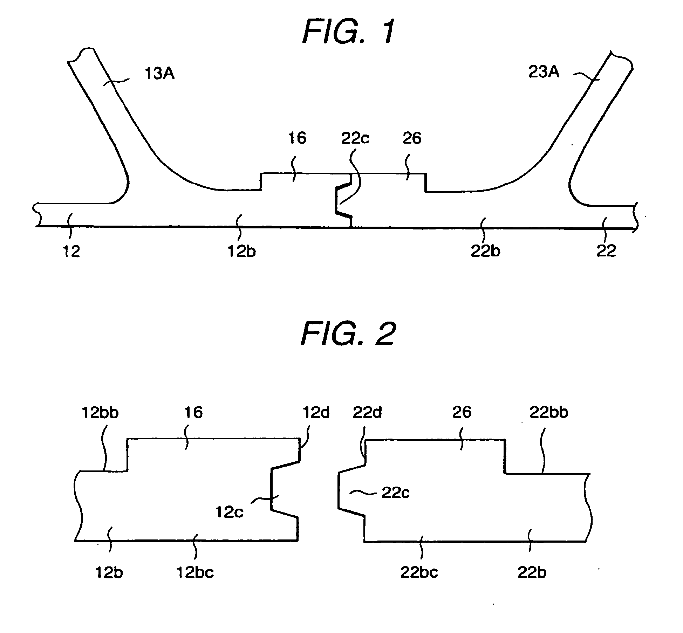

One embodiment of the manufacturing method of a structure body according to the present invention will be explained with reference to Fig. 1 to Fig. 6.

A car body 200 is comprised of a side structure body 201 for constituting a side face of the car body 200, a roof structure body 202 for constituting a roof of the car body 200, a stand frame 203 for constituting a floor of the car body 200, and a side structure body 204 for constituting an longitudinal direction end portion of the car body 200. Each of the side structure body 201, the roof structure body 202, and the stand frame 203 is constituted respectively by joining plural extruded frame members. The longitudinal direction of the extruded frame member is the longitudinal direction of the car body 200. The extruded frame member is a hollow frame member made of an aluminum alloy.

A constitution and a joining method of a hollow extruded frame member 10 and a hollow extruded frame member 20 for constituting the side structure body 201 will be explained. Other portions and other structure bodies are similar to the above.

The hollow extruded frame member 10 and the hollow extruded frame member 20 are comprised of two sheet face plates 11, 12 and 21, 22 and truss shape arranged plural ribs 13 and 23. The two sheet face plates 11 and 12 (the two sheet face plates 21 and 22) are substantially in parallel. A pitch of the truss structure according to ribs 13 and 23 is the same. The truss structure is constituted by the ribs 13 and 23 and a center line of a plate thickness of the face plates 11 and 12 and the face plates 21 and 22. An apex exists at a side of the face plates 11 and 12 and the face plates 21 and 22.

At a vicinity of the apex of the truss structure in an inner side of the railway car, rails 19 and 29 for installing machines and apparatuses are provided integrally. The rails 19 and 29 are comprised of L shape two members. The rails 19 and 20 are seats for installing the machines and apparatuses such as interior mounting plates and chairs, etc..

End portions of the face plates 12 and 22 which are positioned at an outer face side of the car body project to a side of the adjacent hollow frame members 20 and 10 from the end portions of the face plates 11 and 21 in the car body side. These projected face plates are indicated by 12b and 22b. By abutting end portions of the face plates 12b and 22b to each other, the friction stir joining is carried out. A plate thickness of each of the face plate 12b and 22b is thicker than another portion of the face plates 12 and 22.

The hollow frame members 10 and 20 are mounted on a bed 240 by laying them with the face plates 12 and 22 at the lower portion. The face plates 11 and 21 are above. By inserting a rotary tool 250 to the abutted portion from above, and the friction stir joining is carried out. The friction stir joining is carried out from the inner side of the car.

At the end portion of the face plates 12b and 22b, raised portions 16 and 26 which project in the car inner side (namely, the face plates 11 and 21 side) are provided. A width and a height of each of the raised portions 16 and 26 are substantially the same.

At the car inner side, the face plates 11 and 21 are joined through a connection member 30. The end portions of the connection member 30 are mounted (overlapped) to seats 27 and 27 which are provided on the apexes of the truss structure. The seat 27 is arranged at an intersecting point between the rib 23A and the rib 23B. The seat 17 is arranged at an intersecting point between the rib 13A and the rib 13B. At a center of the width of the seat 27 the above stated intersecting point is arranged.. At a center of the width of the seat 17 the above stated intersecting point is arranged. Namely, the apex of the truss of the end portion is arranged at the central portion of the width of the seat 27 and the apex of the truss of the end portion is arranged at the central portion of the width of the seat 17. The width of the seat 27 is similar to the width of the raise portion 35 of the connection member 30 and the width of the seat 17 is similar to the width of the raise portion 35 of the connection member 30. The seat 27 is recessed from the outer face of the face plate 21 and the seat 17 is recessed from the outer face of the face plate 11.

The end portion 27b of the face plate 21 is inclined as a groove for the arc welding to the connection member 30 and the end portion 17b of the face plate 11 is inclined as a groove for the arc welding to the connection member 30.

The connection member 30 is arranged to aim to form the surfaces of the plate plates 11 and 21 continuously. For this reason, the seat 27 (17) is recessed with a plate thickness of the face plate 21 (11) _against the outer face of the face plate 21 (11). The central portion except for the end portions of the connection member 30 is a plate 31 whose plate thickness is substantially the same as the plate thickness of the face plate 21 (11).

The raised portions 35 which project upwardly are provided at the both ends of the connection member 30. In the upper face of the raised portion a V-shape groove 36 is provided. The groove 36 is arranged at a center of the width of the raised portion 35. A width of the raised portion 35 is larger than a diameter of a large diameter portion 252 of the rotary tool 250. The groove 36 becomes a subject for position detecting to guide the rotary tool 250. The groove 36 is detected by a laser sensor and the axial center of the rotary tool 250 is coincided with the groove 36. An extension line of the groove 36, namely on the axial center of the rotary tool 250, there is an intersecting point of the two rib 13A (23A) and rib 13B (23B).

The width of the connection member 30 is smaller than an interval of the face plates 11 and 21 of the two hollow frame members 10 and 20. The connection member 30 is made of the extruded frame member having the same material of the hollow frame members 10 and 20. A length of the connection member 30 is the same of the length of the hollow frame members 10 and 20.

A distance P from the end portion of the face plate 11 to the end portion of the face plate 21 (a distance from the apex of the truss structure of the end portion of the hollow frame member 10 and the apex of the truss structure of the end portion of the hollow frame member 20) is the same pitch P of the truss structure of the other positions.

The truss structure of the hollow frame member is an isosceles triangle. However, the truss structure of the end portion of the hollow frame members 10 and 20 is not an isosceles triangle.

For the above stated reason, the rib 13A (23A) is connected to a midway point of the face plate 12 (22) and the rib 23B is connected to a midway point of the face plate 22. Between a connection portion between the rib 13A and the face plate 12 and a connection portion between the rib 23A and the face plate 22, a space for inserting the friction stir joining apparatus is formed.

Since the ribs 13A and 23A are stood up (*θ* 1 is smaller) in comparison with the ribs 13B and 23B, the plate thickness of the ribs 13A and 23A is thicker than the plate thickness of the ribs 13B and 23B. The plate thickness of the ribs 13B and 23B is thicker than the plate thickness of other ribs 13. The connection portions between the ribs 13A, 13B and 13 and the face plates 11 and 12, 21 and 22 have an arc shape. Further, the thickness of the connection member 30 is determined according to the strength aspect.

The end portion of the face plates 12b and 22b, namely a construction of the abutted portion will be explained. To the end portion of the face plate 22b a trapezoid shape raised portion 22c which projects in the face plate 22b side is provided. To the end face 12d of the hollow frame member which is adjacent to the end portion of the face plate 12b, a trapezoid shape recessed portion 12c is provided, this recessed portion 12c receives the raised portion 22c of the face plate 22b. When the raised portion 22c enters into the recessed portion 12c, the lower faces 12bc and 22bc (the outer face of the car body) of the face plates 12b and 22b form the substantial same face.

Further, the end faces 12d and 22d of the face plates 12b and 22b can contact. The end faces 12d and 22d of the face plates 12b and 22b, except for the recessed portion 12c and the raised portion 22c, are substantially orthogonal in the thickness direction of the face plates 12b and 22b. A height and a width of the recessed portion 12c are larger than a height and a depth of the raised portion 22c. The upper end portions of the recessed portion 12c and the raised portion 22c are formed at an upper portion of an extension line of the upper faces (the inner face of the car body) 12bb and 22bb of the face plates 12b and 22b. Namely, the upper end portions of the recessed portion 12c and the raised portion 22c are in the raised portions 16 and 26.

The recessed portion 12c and the raised portion 22c are arranged to the end portion of a rectangular direction against the thickness direction of the face plates 12b and 22b.

The manufacturing method of this structure body will be explained. The hollow frame members 10 and 20 are mounted on and fixed to the bed 40. Next, the face plates 12b and 22b are abutted, and the raised portion 22c of the end portion of the face plate 22b is inserted into the recessed portion 12c of the face plate 12b. With this construction, the lower faces (the outer face of the car body) of the face plates 12b and 22b become substantially the same face. When one hollow frame member has a wave form in an upr and down direction, by pressing this hollow frame member from above, the raised portion 22c is inserted into the recessed portion 12c. When the hollow frame member has a wave form in an up and down, after the abutting the frame member will maintain the wave form or the substantially linear form. The outer faces of the face plates 12b and 22b become substantially the same face. The end faces 12d and 22d contact or approach.

Next, these frame members 10 and 20 are fixed on the bed 40. Next, the portions of the end faces 12d and 22d are fixed temporally by arc welding. This temporary welding is carried out intermittently.

An upper face of the bed 40 on which the abutted portion of the face plates 12b and 22b are mounted is flat. Three portions which are the vicinity of the abutted portion of the face plates 12b and 22b, a cross-point vicinity of the ribs 13A and 23A, the face plates 12b and 22b, and a cross-point vicinity of the ribs 13B and 23B and the face plates 12 and 22 are mounted on the bed 40 having the same height.

With this condition, the rotary tool 250 of the friction stir joining apparatus is inserted from above to the abutted portion of the raised portions 16 and 26 and is moved along a joining line and then the friction stir joining is carried out. The axial center of the rotary tool 250 is a perpendicular direction (the direction along to the normal line of the joining portion). However, against the advancing direction of the rotary tool 250 the axial center is inclined as is already known.

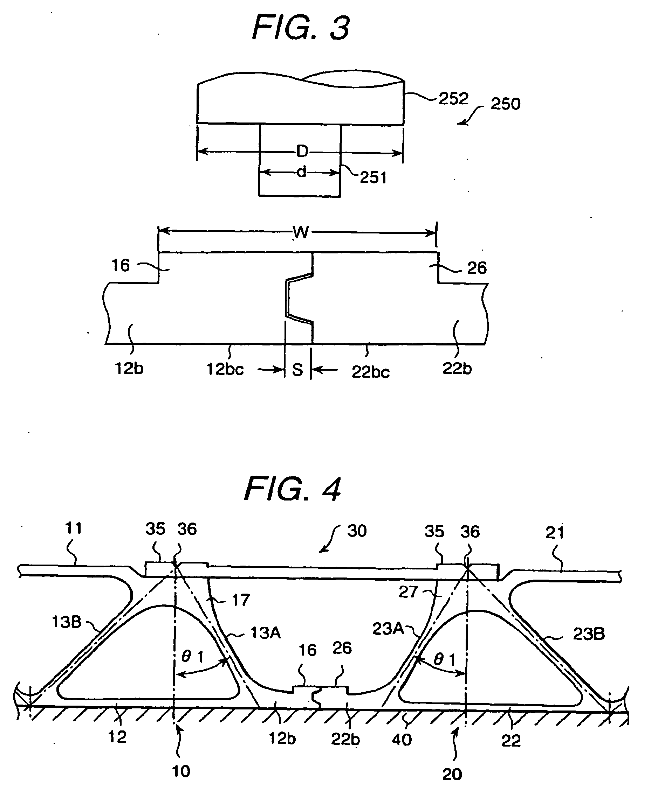

The rotary tool 250 comprises the large diameter portion 252 and the small diameter portion 251 at a tip end of the large diameter portion 252. The tip end of the lower end of the small diameter portion 251 of the rotary tool 250 is positioned below the upper face of the face plates 12b and 22b. Namely, a lower end of the large diameter portion 252 of the rotary tool 250 is positioned from the lower end of the recessed portion 12c. The lower end of the large diameter portion 252 of the rotary tool 250 is positioned between the apex of the raised portions 16 and 26 and the face plates 12b and 22b of the car inner side (the face side of the plates 11 and 21). A diameter of the large diameter portion 252 of the rotary tool 250 is smaller than a width which is comprised of the two raised portions 16 and 26. The small diameter portion 251 of the rotary tool 250 forms a screw member. The diameter of the small portion 251 is larger than a depth S of the recessed portion 12c. With this construction, the recessed portion 12c and the raised portion 22c of the abutted portion is stirred by to the small diameter portion 251. As shown in Fig. 3, at a portion of 1/2 from the end face 12d of the depth S of the recessed portion 12c the axial center of the rotary tool 250 is positioned.

During the friction stir joining, the apex face of the raised portions 16 and 26 is pressed down by rollers which move together with the rotary tool 250.

The raised portions 16 and 26 are detected by a laser sensor. According to this, a height position of the raised portions 16 and 26 is requested and an insertion amount of the rotary tool is determined. Further, a gap (between the end faces 12d and 22d) of the abutted portion of the two raised portions 16 and 26 is requested and the axial center of the rotary tool 250 is coincided to this position.

By this friction stir joining a gap formed between the abutted portion of the face plates 12a and 22b (a gap formed between the end faces 12d and 22d, a gap formed the recessed portion and the raised portion 22c) is buried and joined. The original material of the metal for burying the gap is the raised portions 16 and 26. The outer face side (the outer car side) of the abutted portion is joined flatly. To the outer face side of the face plates 12b and 22b, there is no recessed portion and no step-wise difference of the joining line.

The upper face of the raised portions 16 and 26 becomes a convex form according to the large diameter portion 252 of the rotary tool 250. At the both ends of the recessed portion, the raised portions 16 and 26 are left.

Next, the connection member 30 is mounted on the seats 17 of the face plate 11 and on the seat 27 of the face plate 21. Next, the end portion of the connection member 30 is fixed temporally to the face plates 11 and 21 by the arc welding. This temporary welding is carried out intermittently.

Next, using the friction stir joining apparatus which is used to the friction stir joining of the abutted portion of the face plates 12b and 22b the joining for the connection member 30 and the seats 17 and 27 is carried out. With a condition where the rotary tool 250 is inserted in to a portion to which the connection member 30 and the seat 27 are overlapped, the rotary tool 250 is moved along the joining line and the friction stir joining is carried out.

A width of the raised portion 35 is larger than the diameter of the large diameter portion 252 of the rotary tool 250. At a center of the raised portion 35 a groove 36 is provided. The rotation axial center of the rotary tool 250 is coincided with the groove 36. A tip end of the small diameter portion 251 of the rotary tool 250 is inserted deeply to the seats 17 and 27. With this construction, the overlapping joining is carried out. The lower end of the large diameter portion 252 of the rotary tool 250 is positioned between the upper face of the connection member 30 being the non-raised portion and the apex of the raised portion 35.

The upper face of the raised portion 35 become a convex form according to the large diameter portion 252 of the rotary tool 250. The upper face of the raised portion 35 becomes a convex form according to the large diameter portion 252 of the rotary tool 250. At the both ends of the recessed portion, the raised portion 35 is left.

The above stated sensor of the friction stir joining apparatus detects the groove 36 and the rotary tool 250 is moved along the groove 36.

The axial center of the rotary tool 250 is positioned at the apex point of the truss structure of the two ribs 13A and 13B (23A and 23B) or on the perpendicular line in a vicinity thereof passes. Against the eccentric matter, it corresponds to an increase of the plate thickness of the ribs 13A and 13B (23A and 23B), a shape of the arc which connects the rib and the face plate, a thickness of the connection member 30, and the thickness of the seats 17 and 27, etc..

The joining of the connection member 30 is carried out with the joining of the seat 17, next is carried to the joining of the seat 27. When two rotary tools are used, the joining of the both ends of the connection member 30 can be carried out at the same time.

According to the above stated construction, the joining of the both faces of the hollow frame member is carried out from one side. For this reason, it is unnecessary to reverse the structure body to which one face is joined. Accordingly, the structure can be manufactured at a low cost and with a high accuracy.

Further, the outer face of the joining portion of the face plates 12b and 22b can be joined flatly. The raised portions 16, 26 and 35 are arranged in the structure body and the inner side of the car body and the raised portions 16, 26 and 35 are not present at a portion (the outer face side, the car outer side) in which a flat face is required. Further, at the car outer side there is no raised portion. For this reason, the cut-off etc. of the raised portion is unnecessary and the car body can be manufactured at a low cost.

Further, since the abutted portion of the face plates 12b and 26b is provided with the recessed portion 12c and the raised portion 22c, the two face plates 12b and 22b become as one body, the outer face of the one body become substantially the same face. For this reason, there is no step-wise difference as in the prior technique, so that after the friction stir joining, the cut-off of the outer face side becomes unnecessary. Further, since the plate thickness of the face plates 11b and 22b is not lowered, the frame member can be made with the light weight structure. Of course, some cut-off can be carried out according to the demands.

The raised portion 22c is the trapezoid shape, this raised portion 22c can enters easily to the recessed portion 12c. A size of the tip end of the raised portion 22c can be formed a smaller shape than the side of the end face 22d, for example a triangle shape. On the other hand, with the similar aim, a bottom of the recessed portion 12c can be formed a smaller shape than the side of the end face 12d, for example a triangle shape.

At the abutted portion of the face plates 12b and 22b since there are the raised portions 16 and 26, a gap between the raised portion 22c and the recessed portion 12c can be compensated by the metal.

The axial center of the rotary tool 250 is positioned at a position of a half of the depth of the recessed portion 12c.

Since the end portion of the face plate is formed thick by the raised portions 16 and 26, to the end portion of the face plate the recessed portion 12c and the raised portion 22c can be installed easily. Accordingly, the raised portions 16 and 26 can be utilized effectively.

The positions for mounting the connection member 30 can be set in the structure at the portions in which it can bear to the load during the friction stir joining. For example, the structure can be as shown in Fig. 9 of EP 0797043A2.

The frame member of the above stated embodiment is the hollow frame member, however the hollow portion is not unnecessary. Further, to the face plates 16, 16b and 22, 22b only the rib can be provided.

Further, the bed 40 can be replaced by a backing member such as a roller etc..

Further, the member which is joined by the above stated manner can be used as an outer face (a face to be viewed by eye) of the structure member such as a building structure.

## Claims

1. A method of joining first and second frame members (10,20) by friction stir welding, wherein each of said frame members has a plate portion (12,22) having opposite first and second main faces and an end face (12d,22d), the method comprising abutting said respective end faces and performing friction stir welding at the end faces by means of a rotating tool (250),
**characterised in that** said first frame member (20) has a projection (22c) which, as seen in cross-section in said thickness direction, projects from said end face thereof in the direction perpendicular to said thickness direction, and said second frame member (10) has in its end face has a recess (12c) which receives said projection prior to the joining by friction stir welding, and **in that** during the friction stir welding the axis of said rotating tool (250) is at the position of half of the depth, in the direction perpendicular to said thickness direction, of said recess (12c) of the second frame member.

2. A method according to claim 1 wherein said second frame member (10) has at said first main face of said plate portion (12) thereof and adjacent said end face (12d) a raised portion (16) projecting in the thickness direction of the plate portion, said recess (12c) in said end face (12d) thereof being spaced from said main faces and overlapping in the thickness direction with said raised portion (16) of the frame member.

3. A method according to claim 1 or 2, wherein said first frame member (20) has at said first main face of said plate portion (22) thereof and adjacent said end face (22d)a raised portion (26) projecting in the thickness direction of the plate portion, said projection (22c) being spaced from said main faces and overlapping in the thickness direction with said raised portion (26) of the frame member.

4. A method according to Claims 2 or 3 wherein each said frame member (10, 20) has a first face plate (11,21), a second face plate (12,22) substantially parallel to said first face plate and having a part (12b,22b) projecting in a lateral direction of the frame member further than said first face plate, and at least one rib (13A,23A) connecting said first and second face plates, wherein said laterally projecting part (12b,22b) of said second face plate constitutes said plate portion of the frame member.

## Patentansprüche

1. Verfahren zum Verbinden eines ersten und eines zweiten Rahmenteils (10, 20) durch Reibrührschweißen, wobei jedes Rahmenteil einen Plattenabschnitt (12, 22) mit gegenüberliegenden ersten und zweiten Hauptflächen und einer Stirnfläche (12d, 22d) aufweist, wobei in dem Verfahren die jeweiligen Stirnflächen aneinander angelegt werden und das Reibrührschweißen an den Stirnflächen mittels eines rotierenden Werkzeugs (250) durchgeführt wird,
**dadurch gekennzeichnet, dass** das erste Rahmenteil (20) einen Vorsprung (22c), der im Querschnitt in Dickenrichtung gesehen von der Stirnfläche senkrecht zur Dickenrichtung vorsteht, und das zweite Rahmenteil (10) an seiner Stirnfläche eine Aussparung (12c) hat, die den Vorsprung vor dem Verbinden durch das Reibrührschweißen aufnimmt, und dass sich während des Reibrührschweißens die Achse des rotierenden Werkzeugs (250) in Richtung senkrecht zur Dickenrichtung an der Position halber Tiefe der Aussparung (12c) des zweiten Rahmenteils befindet.

2. Verfahren nach Anspruch 1, wobei das zweite Rahmenteil (10) an der ersten Hauptfläche des Plattenabschnitts (12) und neben der Stirnfläche (12d) einen in Dickenrichtung des Plattenabschnitts vorstehenden erhöhten Abschnitt (16) aufweist, wobei die Aussparung (12c) in der Stirnfläche (12d) Abstand von den Hauptflächen hat und sich in Dickenrichtung mit dem erhöhten Abschnitt (16) des Rahmenteils überlappt.

3. Verfahren nach Anspruch 1 oder 2, wobei das erste Rahmenteil (20) an der ersten Hauptfläche des Plattenabschnitts (22) und neben der Stirnfläche (22d) einen in Dickenrichtung des Plattenabschnitts vorstehenden erhöhten Abschnitt (26) aufweist, wobei der Vorsprung (22c) Abstand von den Hauptflächen hat und sich in Dickenrichtung mit dem erhöhten Abschnitt (26) des Rahmenteils überlappt.

4. Verfahren nach Anspruch 2 oder 3, wobei jedes Rahmenteil (10, 20) eine erste Kopfplatte (11, 21), eine zu dieser im Wesentlichen parallele zweite Kopfplatte (12, 22) mit einem Abschnitt (12b, 22b), der in seitlicher Richtung des Rahmenteils weiter vorsteht als die erste Kopfplatte, und mindestens eine die erste und zweite Kopfplatte verbindende Rippe (13A, 23A) aufweist, wobei der seitlich vorstehende Abschnitt (12b, 22b) der zweiten Kopfplatte den Plattenabschnitt des Rahmenteils darstellt.

## Revendications

1. Procédé de jonction de premier et second éléments de châssis (10, 20) par l'intermédiaire d'un soudage par friction-malaxage, dans lequel chacun desdits éléments de châssis a une partie de plaque (12, 22) ayant des première et seconde faces principales opposées et une face d'extrémité (12d, 22d), le procédé comportant la mise en butée desdites faces d'extrémité respectives et l'exécution d'un soudage par friction-malaxage sur les faces d'extrémité à l'aide d'un outil rotatif (250),
**caractérisé en ce que** ledit premier élément de châssis (20) a une saillie (22c) laquelle, comme observé en coupe transversale dans ladite direction d'épaisseur, fait saillie depuis la face d'extrémité correspondante dans la direction perpendiculaire à ladite direction d'épaisseur, et ledit second élément de châssis (10) a un évidement (12c) dans sa face d'extrémité lequel reçoit ladite saillie avant la jonction par soudage par friction-malaxage, et **en ce que** pendant le soudage par friction-malaxage l'axe dudit outil rotatif (150) est à la position équivalant à la moitié de la profondeur, dans la direction perpendiculaire à ladite direction d'épaisseur, dudit évidement (12c) du second élément de châssis.

2. Procédé selon la revendication 1, dans lequel ledit second élément de châssis (10) a dans ladite première face principale de ladite partie de plaque (12) correspondante et à proximité adjacente de ladite face d'extrémité (12d) une partie surélevée (16) faisant saillie dans la direction d'épaisseur de la partie de plaque, ledit évidement (12c) dans ladite face d'extrémité (12d) correspondante étant espacé desdites faces principales et recouvert dans la direction d'épaisseur par ladite partie surélevée (16) de l'élément de châssis.

3. Procédé selon la revendication 1 ou 2, dans lequel ledit premier élément de châssis (20) a, dans ladite première face principale de ladite partie de plaque (22) correspondante et à proximité adjacente de ladite face d'extrémité (22d), une partie surélevée (26) faisant saillie dans la direction d'épaisseur de la partie de plaque, ladite saillie (22c) étant espacée desdites faces principales et recouverte dans la direction d'épaisseur par ladite partie surélevée (26) de l'élément de châssis.

4. Procédé selon la revendication 2 ou 3, dans lequel chacun desdits éléments de châssis (10, 20) a une première plaque avant (11, 21), une seconde plaque avant (12, 22) en grande partie parallèle à ladite première plaque avant et ayant une partie (12b, 22b) faisant saillie dans une direction latérale de l'élément de châssis davantage que ladite première plaque avant, et au moins une nervure (13A, 23A) connectant lesdites première et seconde plaques avant, ladite partie faisant saillie latéralement (12b, 22b) de ladite seconde plaque de face constituant ladite partie de plaque de l'élément de châssis.
